# EUROPEAN PATENT APPLICATION

(11) **EP 3 647 896 A1**
(43) Date of publication of application: **06.05.2020**
(21) Application number: 18203082.5
(22) Date of filing: 29.10.2018
(51) Int. Cl.: G05D 1/02, G05D 1/00, B25J 19/02

(54) **VIRTUAL COUPLING**

(71) Applicant: FQ IP AB, 411 19 Göteborg (SE)
(72) Inventor: Augustsson, Per, 411 19 Göteborg (SE)
(74) Representative: AWA Sweden AB

(57) **Abstract**

According to a first aspect, a modular optical unit configured to be mounted to a self-propelled load bearing cart is provided. The modular optical unit comprises an optical sensor which is configured to sense a vertical sensor area. The vertical sensor area is vertically overlapping a mobile optical marker. The optical sensor is configured to derive sensor signals based on optical sensing of the mobile optical marker. The modular optical unit also comprises a computing unit which is configured to receive the sensor signals, determine change in velocity and change in direction of the mobile optical marker. The computing unit is further configured to generate control signals on the basis of the determined change in velocity and change in direction, and transfer the control signals to the self-propelled load bearing cart such that it can follow the mobile optical marker.

## Description

### Field of the invention

This invention relates to a logistic system for self-propelled load bearing carts.

### Background art

All forms of handling of goods, material or items of manufacturing requires intralogistics, i.e. logistics within some confined area such as a factory, warehouse or yard. Traditionally, forklifts have been the dominating vehicle both for transporting pallets of smaller or larger individual items. Forklifts however have many limitations. They are generally limited to lifting items specifically adapted for the forks, such as pallets. The require a relatively large clearance to operate and they are the root of many work place accidents. The forklifts are thus not suitable for use in environments populated with human workers. As a consequence, forklifts are being replaced in many environments by manual carts pushed by human workers. The carts are less likely to cause accidents and are much more adaptable to specific uses or sizes of the transported items. However, the manual carts also have drawbacks, such as limitations of the maximum load capacity that a human operator can handle, and in that the logistic system becomes relatively labor intensive.

### Summary

It is an object to mitigate, alleviate or eliminate one or more of the above-identified deficiencies in the art and disadvantages singly or in any combination and solve at least the above mentioned problem.

According to a one aspect of the present inventive concept there is provided a modular optical unit. The modular optical unit is configured to be mounted to a self-propelled load bearing cart. The modular optical unit comprises an optical sensor which is configured to sense a vertical sensor area. The vertical sensor area is vertically overlapping a mobile optical marker. The optical sensor is configured to derive sensor signals based on optical sensing of the mobile optical marker. The modular optical unit also comprises a computing unit. The computing unit is configured to receive the sensor signals, determine change in velocity and change in direction of the mobile optical marker. The computing unit is also configured to generate control signals on the basis of the determined change in velocity and change in direction. The computing unit is further configured to transfer the control signals to the self-propelled load bearing cart, such that the self-propelled load bearing cart can follow the modular optical unit.

The modular optical unit enables self-propelled load bearing carts or other automated guided vehicles to be controlled and steered without the need for a human driver. The modular optical unit could be placed on carts operating in industrial environments such as warehouses or factories where on- and off-loading of goods and equipment need to be made in a precise and efficient manner. The modularity of the unit makes it possible to easily retrofit and update existing self-propelled load bearing carts. It also makes it possible to remove the modular unit for charging, data communication, maintenance and replacement.

According to one aspect, the modular optical unit further comprises a wireless communication unit. The wireless communication unit is configured to at least one of transmit or receive a wireless identity signal. The wireless communication unit makes it possible to provide bi-directional communication with any other wireless communication unit in the logistics system.

According to one aspect, wherein the computing unit is further configured to derive identity data from the received sensor signals. The mobile optical marker may comprise an optical code and the optical sensor may be configured to read the optical code, and the computing unit may be configured to derive identity data from the read optical code. Embodiments in which the optical marker contains an optical code are easy to implement and makes it possible for the computing unit to select which optical marker to follow if several are present in the system.

According to one aspect a virtual coupling between a self-propelled load bearing cart and a mobile optical marker is provided. The virtual coupling comprises a mobile optical marker, and an optical sensor mounted to the self-propelled load bearing cart. The optical sensor is configured to sense a vertical sensor area. The vertical sensor area is vertically overlapping the mobile optical marker. The optical sensor is configured to derive sensor signals based on sensing of the mobile optical marker. A virtual coupling is very versatile and easy to adapt, as no mechanical specifically adapted connections are needed. The system can also be easily updated e.g. by software upgrades.

According to one aspect the virtual coupling further comprises a computing unit configured to receive the sensor signals, determine change in velocity and change in direction of the mobile optical marker. The computing unit is also configured to generate control signals on the basis of the determined change in velocity and change in direction, and transfer the control signals to the self-propelled load bearing cart, such that the self-propelled load bearing cart can follow the mobile optical marker. To create a modular unit, the computing unit may be integrated with the optical sensor.

According to one aspect, the mobile optical marker displays an optical difference in at least two different directions, enabling the determination of change in velocity and direction in all directions in a plan. The mobile optical marker may display an optical difference in at least four different directions which facilitates directional computations. The four different directions may be a first, a second, a third and a fourth direction, wherein the first and second direction are substantially opposite directions and the third and fourth directions are substantially opposite directions.

According to one aspect, the mobile optical marker comprises a circular optical marker, further facilitating the directional computations.

According to one aspect, the vertical sensor area has a vertical sensor area center axis and a computing unit which is configured to generate control signals for aligning the vertical sensor area center axis with a center axis of the mobile optical marker, such that the self-propelled load bearing cart follows the mobile optical marker. A central reference points facilitates control and navigations.

The mobile optical marker may be provided on a mobile unit operated by a human driver or on a remote controlled or autonomous unit. The remote controlled or autonomous unit, or mobile unit operated by a human driver, may comprise a projector configured for projecting the optical marker. Having a projected optical marker makes it easy to change the configuration of the optical marker. The projector may further be configured to project an optical code comprising identity information, to be read by the optical sensor. This enables the sensing unit to determine the identity of the projecting unit and thus select which optical marker to follow.

According to one aspect, the remote controlled or autonomous unit may comprise a wireless communication unit. The wireless communication unit is configured to at least one of transmit and receive wireless communication to or from the self-propelled load bearing cart. The wireless communication unit makes it possible to provide bi-directional communication with the self-propelled load bearing cart. The wireless communication unit is configured to at least one of receive and transmit identity information to or from the self-propelled load bearing cart, which may function as an identification/verification process between the remote controlled or autonomous unit and the self-propelled load bearing cart.

The mobile optical marker in any of the aspects herein may comprise a projected optical marker. Having a projected optical marker makes it easy to change the configuration of the optical marker. The mobile optical marker may comprise an optical code, which enables a sensing unit to determine the identity of the projecting unit and thus select which optical marker to follow.

The virtual coupling in any of the aspects may further comprise a wireless communication unit configured to at least one of transmit or receive a wireless identity signal.

The remote controlled or autonomous unit in any of the aspects herein may comprise means for flying, which may provide access to areas having limited accessibility and enable rapid movement across for example a factory when a guiding task has been concluded.

According to one aspect, the virtual coupling further comprises a stationary projector configured to project the mobile optical marker. The stationary projector may be a roof mounted stationary projector. The stationary projector may function as a maritime pilot, guiding a self-propelled load bearing cart in areas in which high precision is important.

The virtual coupling in any of the aspects may comprise a projected optical code comprising identity information, to be read by the optical sensor.

According to another aspect of the present inventive concept, a self-propelled load bearing cart is provided. The self-propelled load bearing cart is configured to follow a mobile optical marker. The self-propelled load bearing cart comprises an optical sensor. The optical sensor is configured to sense a vertical sensor area which is vertically overlapping the mobile optical marker. The optical sensor is configured to derive sensor signals based on sensing of the mobile optical marker. The self-propelled load bearing cart also comprises a drive unit, and a computing unit. The computing unit is configured to receive the sensor signals, determine change in velocity and change in direction of the mobile optical marker, generate control signals on the basis of the determined change in velocity and change in direction, and transfer the control signals to the drive unit, such that the self-propelled load bearing cart follows the mobile optical marker.

The mobile optical marker may comprise an optical code, and the optical sensor may be configured to read the optical code. Further, the computing unit may be configured to derive identity data from the read optical code.

The self-propelled load bearing cart in any of the aspects may further comprise a wireless communication unit configured to at least one of transmit or receive a wireless identity signal.

A system comprising a self-propelled load bearing cart and a mobile optical marker is further provided. The mobile optical marker comprises a self-propelled remote controlled or autonomous unit, and the self-propelled load bearing cart comprises an optical sensor configured to sense a vertical sensor area vertically overlapping the mobile optical marker. The optical sensor is configured to derive sensor signals based on sensing of the mobile optical marker. The self-propelled load bearing cart further comprises a drive unit, and a computing unit configured to receive the sensor signals, determine change in velocity and change in direction of the mobile optical marker, generate control signals on the basis of the determined change in velocity and change in direction, and transfer the control signals to the drive unit, such that the self-propelled load bearing cart follows the mobile optical marker.

The system may comprise a remote controlled or autonomous unit comprising means for flying.

A method in a self-propelled load bearing cart is further provided. The method comprises sensing a projected optical marker, using an optical sensor, deriving a control signal from the sensed optical marker, using a computing unit transferring the control signal to a drive unit, such that the self-propelled load bearing cart follows the projected optical marker.

The method may further comprise the steps of receiving identity information derived from at least one of a wireless signal, received using a wireless communication unit, and an optical code, sensed using the optical sensor, and using the identity information for determining if the projected optical marker should be followed.

Please note that any aspect or part of an aspect as well as any method or part of method or any unit, feature or system could be combined in any applicable way if not clearly contradictory.

### Brief descriptions of the drawings

The invention will by way of example be described in more detail with reference to the appended schematic drawings, on which:
Figure 1A shows an elevated view of a virtual coupling between a self-propelled load bearing cart with a modular optical unit and a remote controlled or autonomous self-propelled guide unit.
Figure 1B shows an enlargement of a portion of the virtual coupling of fig. 1A.
Figure 1C shows an elevated view of a virtual coupling between a self-propelled load bearing cart with a modular optical unit and a remote controlled or autonomous self-propelled guide unit, in an alternative embodiment.
Figure 2 shows a perspective elevated view from the left of the modular optical unit.
Figure 3 shows a perspective view of the self-propelled load bearing cart from underneath.
Figure 4 shows a detailed view of the remote controlled or autonomous self-propelled guide unit.
Figure 5A shows an elevated of two self-propelled load bearing carts platooning, in a first embodiment.
Figure 5B shows an elevated of two self-propelled load bearing carts platooning, in a second embodiment.
Figure 6 shows an elevated view of a virtual coupling between a self-propelled load bearing cart and a remote controlled or autonomous self-propelled guide unit when the remote controlled or autonomous self-propelled guide unit is flying.
Figure 7 shows a ceiling mounted stationary projector when part of a logistic system with the self-propelled load bearing cart.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

Additionally, variations to the disclosed embodiments can be understood and effected by the skilled person in practicing the claimed invention, from a study of the drawings, the disclosure, and the appended claims.

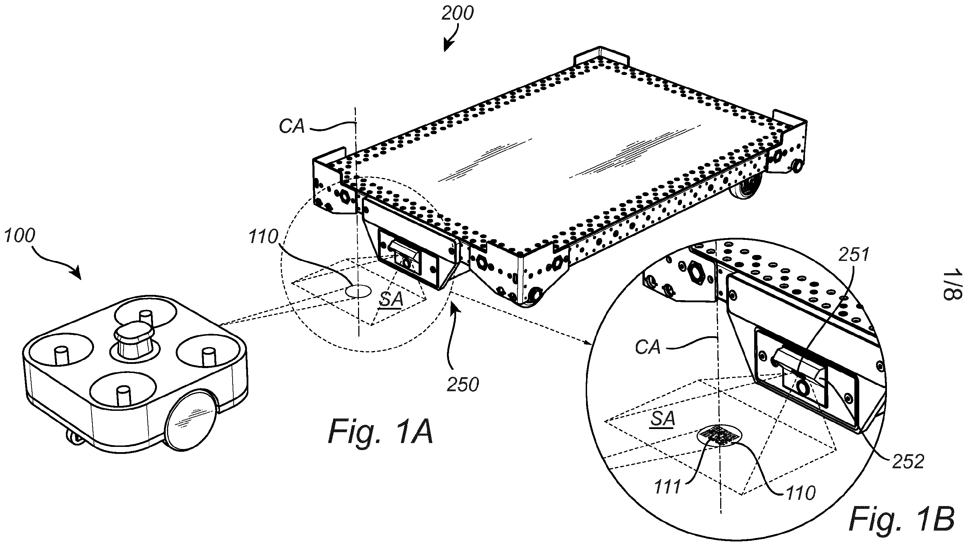

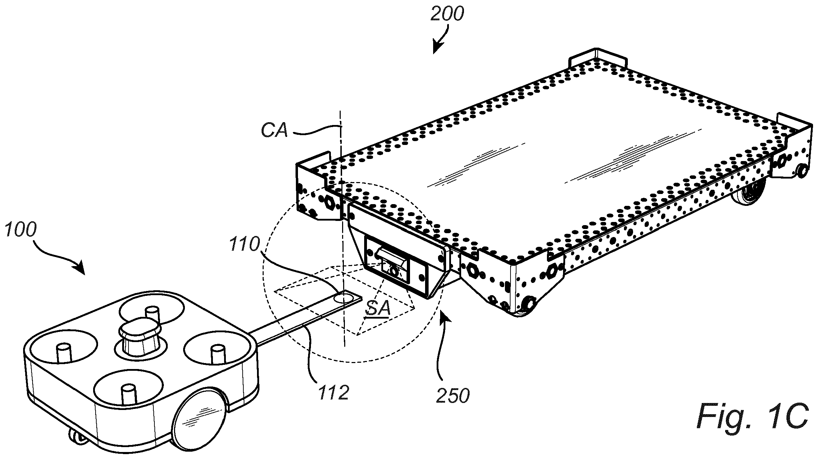

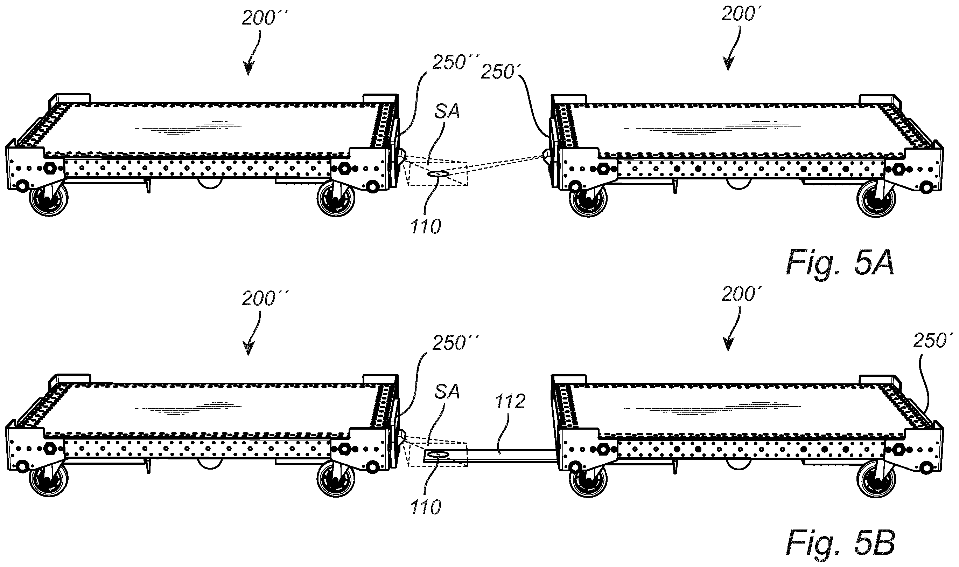

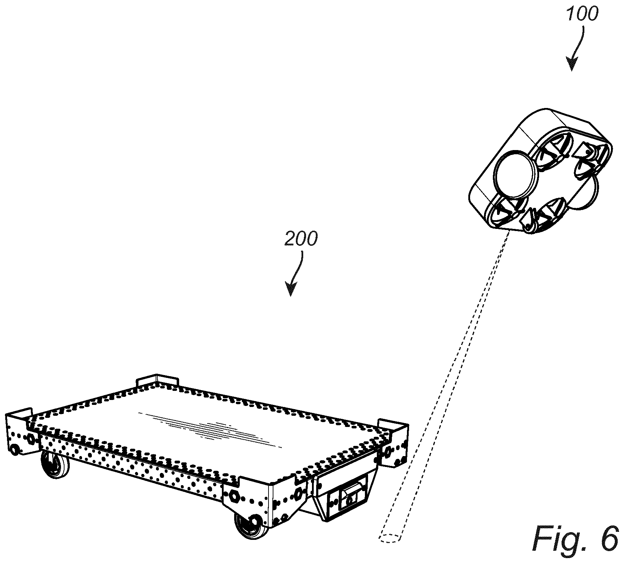

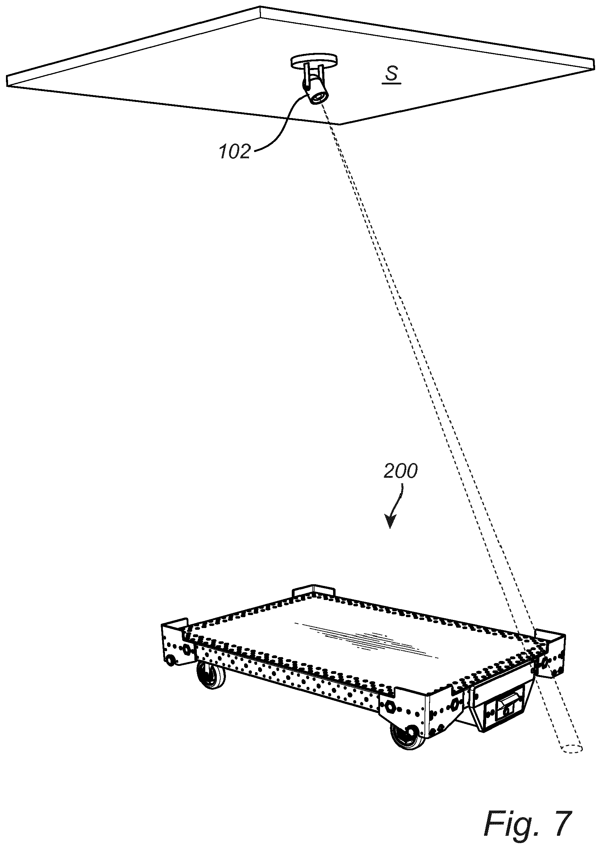

A logistic system using virtual couplings for moving a self-propelled load bearing carts are provided. The system may be used in intralogistics or in any logistic system in which material, goods or items need to be transported in an efficient and/or autonomous way. A system with virtual couplings is very versatile and easy to adapt, as no mechanical specifically adapted connections are needed. The system can also be easily updated e.g. by software upgrades. In the embodiments described in the appended figures, an optical sensor is configured to sense an optical marker, which is shown as a projected optical marker. However, in any of the embodiments, it is equally conceivable that the optical marker is a printed optical marker which can be placed on any mobile unit acting as a guide unit, thus resulting in the optical marker being mobile. The virtual coupling makes it possible for a self-propelled load bearing carts to be moved either by using a specific guide unit, such as shown in figs. 1 and 6, a stationary guide, such as shown in fig. 7 or by using another self-propelled load bearing cart as a guide, such as shown in figs. 5A, 5B. The system makes it possible to switch between different guides and between printed optical markers and projected optical markers. As an example, the self-propelled load bearing carts can use a specific guide unit, such as a remote controlled, autonomous or driver operated self-propelled guide unit for a relatively long distance transportation, and switch to a stationary guide for high precision short distance transportation. The mobile optical marker could be placed on any existing mobile unit already operating in a logistic system, such as a tow tractor, a manual cart or a forklift.

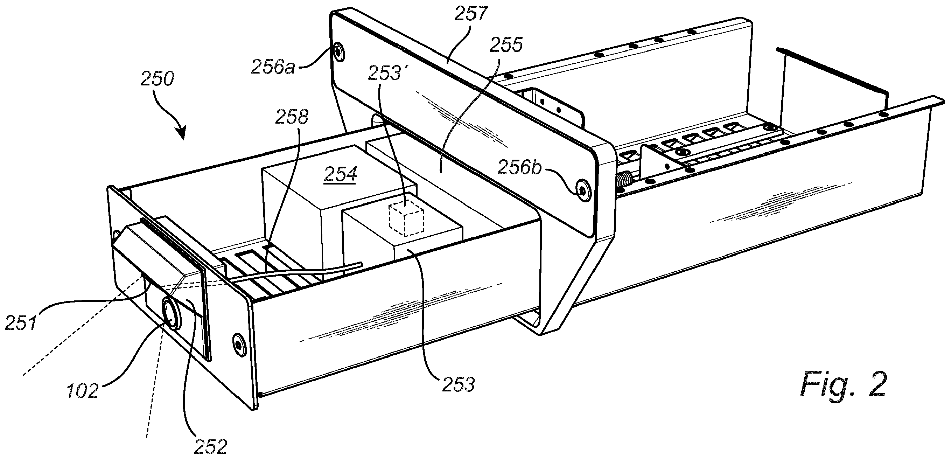

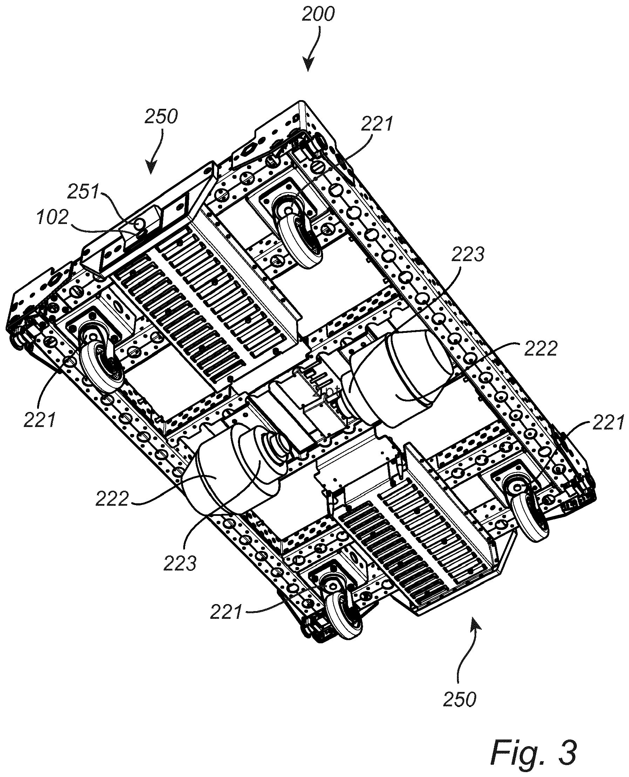

Fig. 1A shows a virtual coupling between a self-propelled load bearing cart 200 and a mobile optical marker 110 projected on the ground by a remote controlled or autonomous self-propelled guide unit 100. The self-propelled load bearing cart 200 comprises an optical sensor 251 mounted to a tilted protrusion 252 of a modular unit 250 of the self-propelled load bearing cart 200, such that the optical sensor 251 is configured to sense a vertical sensor area **SA** vertically overlapping the mobile optical marker 110. The optical sensor 251 is configured to derive sensor signals based on sensing of the mobile optical marker 110. The optical sensor 251 is connected to a computing unit (further described with reference to fig. 2). The computing unit is adapted to receive the sensor signals and determine change in velocity and change in direction of the mobile optical marker 110 and generate control signals on the basis of the determined change in velocity and change in direction. The computing unit then transfers the control signals to a drive unit (further described with reference to fig. 3) of the self-propelled load bearing cart 200, such that the self-propelled load bearing cart 200 can follow the mobile optical marker 110, and thereby the remote controlled or autonomous self-propelled guide unit 100.

In the embodiment described with reference to fig. 1A, the guide unit is a remote controlled or autonomous self-propelled guide unit 100. However, in alternative embodiments it is conceivable that the guide unit is a mobile unit operated by a driver.

In the embodiment described with reference to fig. 1A, the mobile optical marker 110 is a projected mobile optical marker. However, in alternative embodiments, it is equally conceivable that the mobile optical marker is a printed optical marker placed on a guide unit, e.g. by means of an adhesive.

Fig. 1B is an enlargement of the mobile optical marker 110 and the optical sensor 251. In the embodiment disclosed in fig. 1B, the mobile optical marker 110 is a circular mobile optical marker 110 projected in a color likely to provide contrast against the surface on which is projected. Suitable colors are clear versions of yellow, blue or red which provides contrast against the typical gray or green colors of factory floors. To enable determination of the change in velocity and of the change in direction of a mobile optical marker 110, the mobile optical marker 110 should preferably display an optical difference in at least two different directions, i.e. the mobile optical marker should preferably not just be a straight line, as this makes it hard to determine movement or change along the length axis of such straight line. An advantage with having a circular optical marker 110 is that the direction of a movement of the circular optical marker 110 in relation to the optical sensor 251 can be instantly derived, as a circular optical marker 110 displays an optical difference in all directions in the projected plane. As such, less computation e.g. with regards to relative movements of different items of the optical marker needs to be made.

The vertical sensor area **SA** has a vertical sensor area center axis **CA**, running vertically through the vertical sensor area **SA**. In the embodiment shown in figs. 1A, 1B, the computing unit of the self-propelled load bearing cart 200 is configured to generate control signals for aligning the vertical sensor area **SA** center axis **CA** with a center axis of the circular mobile optical marker 110, such that the self-propelled load bearing cart 200 can follow the mobile optical marker 110 by constantly controlling for keeping the mobile optical marker 110 in the center of the vertical sensor area.

In the embodiment of figs. 1A and 1B, the mobile optical marker 110 further comprises an optical code 111, such as for example a QR-code or barcode. The optical sensor 251 is configured to read the optical code 111, and the computing unit of the self-propelled load bearing cart 200 is configured to derive identity data from the read optical code 111. The computing unit may have the identity data stored in a data storage unit connected to the computing unit, or may have to fetch the identity data from a database placed at a remote location, such as in a cloud based database.

By the derived identity data, the self-propelled load bearing cart 200 may determine whether or not to follow a specific optical marker and thus which optical marker should be followed.

In an alternative embodiment, the mobile optical marker has the shape of a square and as such displays an optical difference in at least four different directions. In a square, the first and second direction are substantially opposite directions and the third and fourth directions are substantially opposite directions, which makes it possible for a computing unit to compute the direction of relative movement of the mobile optical marker in relation to the optical sensor.

The self-propelled load bearing cart 200 and the remote controlled or autonomous self-propelled guide unit 100 may be in wireless connection with each other, by means of wireless communication units in the self-propelled load bearing cart 200 and in the remote controlled or autonomous self-propelled guide unit 100, respectively. The wireless communication could for example enable the exchange of information and data, which could comprise wireless identity information which could assist or replace identity information in the mobile optical marker. One advantage with having the identity information communicated using the wireless communication means is that the communication could be bidirectional, such that the remote controlled or autonomous self-propelled guide unit 100 also may receive identity information from the self-propelled load bearing cart 200. It is further possible to transmit more complex data such as driving instructions from the remote controlled or autonomous self-propelled guide unit 100 for autonomous driving by the self-propelled load bearing cart 200, or information of the specifics of the load on the self-propelled load bearing cart 200 (weight, height etc.) which may affect routes and driving patterns.

Fig. 1C shows a virtual coupling between a self-propelled load bearing cart 200 and a mobile optical marker 110, being a printed mobile optical marker 110 placed on an arm 112 connected to the remote controlled or autonomous self-propelled guide unit 100. Apart from the mobile optical marker 110 being a printed mobile optical marker 110, the features of fig. 1C are the same as the features of fig. 1A. The printed mobile optical marker 110 may, just as the projected mobile optical marker, further comprise an optical code, such as for example a QR-code or barcode readable by the optical sensor 251.

Fig. 2 shows the modular optical unit 250, which is seen mounted to the self-propelled load bearing cart in fig. 1A, in a perspective elevated view from the left. The modular optical unit 250 is configured to be mounted as an inset in a holder fixated to the self-propelled load bearing cart by means of fixation members in the form of screws 256a, 256b positioned in through-holes in a frontal plate 257 of the holder. The optical sensor 251 is mounted to a tilted protrusion 252, which is protruding from the front of the modular unit 250. The tilted protrusion provides an angle to the optical sensor 251, the angle is preferably in the interval 30 - 90 degrees downwards from the horizontal plane. As the optical sensor 251 is mounted to the tilted protrusion 252, the optical sensor 251 has a sensed area which is tilted downward-forward, such that optical markers placed beneath or below and in front of the optical sensor 251 can be sensed. The downward-forward sensing optical sensor 251 enables sensing of optical markers projected on the ground which creates large freedom with regards to the distance between the unit projecting the optical marker and the optical sensor 251, as well as with regards to the location of the unit projecting the optical marker.

The optical sensor 251 is connected to a computing unit 253, such as a general purpose computer comprising processing and memory means for computations. The computing unit 253 is adapted to receive the sensor signals via the connection 258 and determine change in velocity and change in direction of a mobile optical marker and generate control signals on the basis of the determined change in velocity and change in direction. The computing unit 253 then transfers the control signals to a drive unit (further described with reference to fig. 3) of the self-propelled load bearing cart, such that the self-propelled load bearing cart can follow the mobile optical marker 110. In the embodiment of fig. 2, the modular optical unit 250 further comprises a battery unit 255 for propelling the self-propelled load bearing cart.

The computing unit 253 is connected to a data storage unit 254. The data storage unit 254 could be configured to store identity data of different units of a logistics system comprising optical markers. This identity data may be used in a determination process to determine which optical markers the self-propelled load bearing cart should follow. The data storage unit 254 may further be used to store data collected from the self-propelled load bearing cart for the purpose of analytics. Data for analytics could for example be data with regards to driving patterns, time of usage, load weights, battery usage etc. The stored data may be transferred to a central system in the logistic system, either continuously by wireless communication or by wired connection e.g. when the batteries 255 of the modular optical unit 250 are charged, or if the entire modular optical unit 250 is replaced when the batteries 255 need recharging.

The computing unit 253 of the modular optical unit 250 may comprise a wireless communication unit 253', such as for example a wireless communication unit based on the IEEE 802.11 standard (WLAN or Wi-Fi) or UHF radio communication such as the IEEE 802.15.1 standard (Bluetooth) or a wireless communication unit based on the 3GPP NR standards (5G) enabling Ultra-Reliable Low-Latency Communications (URLLC),

The wireless communication unit 253' may be configured to fetch identity data from a database placed at a remote location, such as in a cloud based database. The identity data may relate to the identity of a guide unit or the identity of a mobile unit operated by a driver or the identity of a fixed installation projecting a mobile optical marker. The wireless communication unit 253' may also be used for communicating identity information of the self-propelled load bearing cart to a guide unit and/or assist or replace identity information received from a mobile optical marker. The wireless communication between the self-propelled load bearing cart and a guide unit may be bidirectional, such that a guide unit also may receive information from the self-propelled load bearing cart, which information could comprise identity and/or the specifics of the load on the self-propelled load bearing cart (weight, height etc.). It is further possible to transmit or receive more complex data such as driving instructions from a guide unit for autonomous driving by the self-propelled load bearing cart, or information which may affect routes and driving patterns.

However, in alternative embodiments it is equally conceivable that the battery and/or computing unit and/or storage means are placed at a separate location in the self-propelled load bearing cart.

Fig. 3 shows the self-propelled load bearing cart 200 from underneath when two modular optical units 250 have been mounted to the front and rear ends of the self-propelled load bearing cart 200. In the embodiment shown in fig. 3, both the modular optical unit 250 in the front and the modular optical unit 250 in the rear have an optical sensor 251 and a projector 102 configured to project a mobile optical marker. The two modular optical units 250 are connected to a first and second drive unit 223 comprising an electrical motor for propelling the self-propelled load bearing cart 200. The drive units 223 are connected to drive wheels 222. By means of the two drive units being independently operable in both forward and backward rotational direction, the drive units can propel the self-propelled load bearing cart 200 backward and forward as well as rotate the self-propelled load bearing cart 200. The self-propelled load bearing cart 200 is further supported by four swiveling castors 221 which move in a pattern following the propulsion of the two drive units 223.

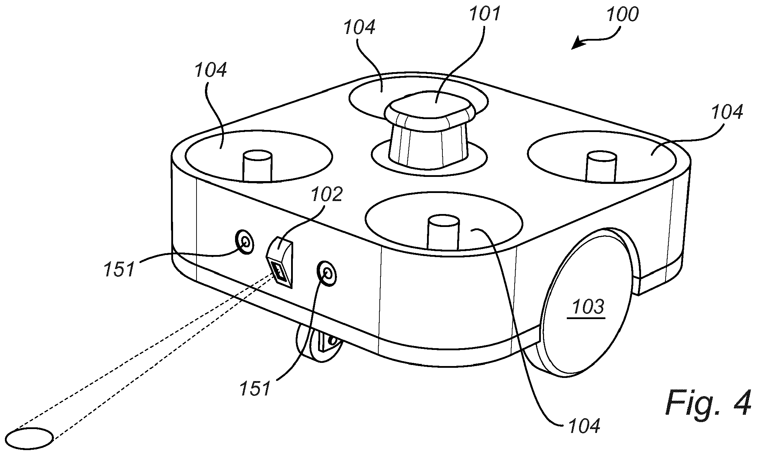

Fig. 4 shows a detailed view of the remote controlled or autonomous self-propelled guide unit 100 shown in fig. 1A. The remote controlled or autonomous self-propelled guide unit 100 comprises two drive wheels 103 for propulsion and two swiveling castors which follow the movements created by the drive wheels 103. The remote controlled or autonomous self-propelled guide unit 100 comprises a projector 102 configured to project the mobile optical marker 110 and optical sensors 151 for assisting in the navigation of the remote controlled or autonomous self-propelled guide unit 100.

The remote controlled or autonomous self-propelled guide unit 100 further comprises a Lidar 101 using pulsed laser to detect ranges to objects surrounding the remote controlled or autonomous unit 100 and thus assisting in navigation and collision avoidance.

The remote controlled or autonomous self-propelled guide unit 100 described in the embodiment disclosed in fig. 4 further comprises a wireless communication unit configured to transmit and receive wireless communication to and/or from at least one of: a self-propelled load bearing cart 200, a mobile unit operated by a driver, and a stationary wireless unit being part of a logistic system (shown in fig. 7). The wireless communication could be information or data e.g. relating to the identity of the remote controlled or autonomous unit 100 or the identity of the self-propelled load bearing cart. The wireless communication between the self-propelled load bearing cart and the remote controlled or autonomous unit 100 may be bidirectional, such that the remote controlled or autonomous unit 100 may transmit and/or receive information from/to the self-propelled load bearing cart, which information could comprise, apart from identity information, specifics of the load on the self-propelled load bearing cart (weight, height etc.). It is further possible to transmit and/or receive more complex data such as driving instructions to or from the self-propelled load bearing cart, or information which may affect routes and driving patterns.

The remote controlled or autonomous unit 100 described in the embodiment disclosed in fig. 4 further comprises means for flying, in the form of four rotors 104 mounted in rotor tunnels. The rotors 104 enable the remote controlled or autonomous unit 100 to fly like a flying drone and project the mobile optical marker while flying above or in from of the self-propelled load bearing cart.

Fig. 5A shows two self-propelled load bearing carts 200', 200" platooning, i.e. the first self-propelled load bearing cart 200' acts as a guide unit guiding and leading the second self-propelled load bearing cart 200" which consequently follows. In the embodiment shown in fig. 5A, the modular optical units 250', 250" are both identical units to the unit described with reference to fig. 2, and both the first and second modular optical unit has the capability of projecting a mobile optical marker 110 and sensing a mobile optical marker 110. However, in alternative embodiments, it is equally conceivable that the first and second modular optical units are different, e.g. such that only one type of modular optical unit only can project the mobile optical marker and only a different type of modular optical unit only can sense the mobile optical marker.

The first self-propelled load bearing cart 200' projects a mobile optical marker 110 and the second self-propelled load bearing cart 200" senses a vertical sensor area **SA** vertically overlapping the mobile optical marker 110, such that the optical sensor 250" of the second self-propelled load bearing cart 200" optically senses the mobile optical marker 110. The mobile optical marker 110 may comprise an optical code (described with reference to fig. 1B) verifying that the mobile optical marker is the correct mobile optical marker to follow. Alternatively, the first and second self-propelled load bearing carts 200', 200" may be connected to each other by wireless connection. The step of mutual verification of the identity of the first and second self-propelled load bearing carts 200', 200" may be done by means of the wireless communication.

The computing unit of the modular optical unit 250" of the second self-propelled load bearing cart 200" receives sensor signals from the optical sensor and determines change in velocity and change in direction of the mobile optical marker 110 and thus of the first self-propelled load bearing cart 200' which it is to follow. The computing unit then generates control signals on the basis of the determined change in velocity and change in direction. The computing unit then transfers the control signals to the drive unit of the second self-propelled load bearing cart 200", such that the second self-propelled load bearing cart 200" can follow the mobile optical marker 110, and thereby the first self-propelled load bearing cart 200'.

Fig. 5B shows two self-propelled load bearing carts 200', 200" platooning, i.e. the first self-propelled load bearing cart 200' acts as a guide unit guiding leading the second self-propelled load bearing cart 200" which consequently follows. In the embodiment shown in fig. 5B, the first self-propelled load bearing cart 200' comprises a printed mobile optical marker 110 placed on an arm 112 connected to the rear of the first self-propelled load bearing cart 200'. The first self-propelled load bearing cart 200' only has a modular optical unit 250' in the front, which makes this a cheaper alternative. The printed mobile optical marker 110 may, just as the projected mobile optical marker, further comprise an optical code, such as for example a QR-code or barcode readable by the optical sensor.

Fig. 6 shows the embodiment of fig. 1A with a self-propelled load bearing cart 200 being guided by a remote controlled or autonomous unit 100. In the situation depicted in fig. 6, the remote controlled or autonomous unit 100 is using its flying capabilities (further described with reference to fig. 4) to guide the self-propelled load bearing cart 200 from the air. One advantage of this is that the remote controlled or autonomous unit 100 can access areas having limited accessibility. Also, the remote controlled or autonomous unit 100 can rapidly move across for example a factory when a guiding task has been concluded.

Fig. 7 shows a ceiling mounted stationary projector 102 which is part of a logistics system for guiding self-propelled load bearing carts 200. The ceiling mounted stationary projector 102 can move in all directions and thereby project the mobile optical marker onto any surface within its reach. The ceiling mounted stationary projector 102 can for example be placed at a location at which the self-propelled load bearing carts 200 should park for loading or unloading, and thus function as a local parking assistant or having a function similar to that of a maritime pilot, guiding a self-propelled load bearing cart 200 in areas in which high precision is important.

Please note that any aspect or part of an aspect as well as any method or part of method or any unit, feature or system could be combined in any applicable way if not clearly contradictory.

## Claims

1. A modular optical unit (250, 250', 250") configured to be mounted to a self-propelled load bearing cart (200, 200', 200"), the modular optical unit (250, 250', 250") comprising:
an optical sensor (251) configured to sense a vertical sensor area (SA) vertically overlapping a mobile optical marker (110), wherein the optical sensor (251) is configured to derive sensor signals based on optical sensing of the mobile optical marker (110),
a computing unit (253) configured to:
receive the sensor signals,
determine change in velocity and change in direction of the mobile optical marker (110),
generate control signals on the basis of the determined change in velocity and change in direction, and
transfer the control signals to the self-propelled load bearing cart (200, 200', 200"), such that the self-propelled load bearing cart (200, 200', 200") can follow the mobile optical marker (110).

2. The modular optical unit according to claim 1, further comprising a wireless communication unit (253'), wherein the wireless communication unit (253') is configured to at least one of transmit or receive a wireless identity signal.

3. The modular optical unit according to any one of claims 1 and 2, wherein the mobile optical marker (110) comprises an optical code (111), and wherein:
the optical sensor (251) is configured to read the optical code (111), and
the computing unit (253) is configured to derive identity data from the read optical code.

4. A virtual coupling between a self-propelled load bearing cart (200, 200', 200") and a mobile optical marker (110), the virtual coupling comprising:
a mobile optical marker (110), and
an optical sensor (251) mounted to the self-propelled load bearing cart (200, 200', 200"), wherein the optical sensor (251) is configured to sense a vertical sensor area (SA) vertically overlapping the mobile optical marker (110), and wherein the optical sensor (251) is configured to derive sensor signals based on sensing of the mobile optical marker (110).

5. The virtual coupling according to claim 4, wherein the virtual coupling further comprises a computing unit (253) configured to:
receive the sensor signals,
determine change in velocity and change in direction of the mobile optical marker (110),
generate control signals on the basis of the determined change in velocity and change in direction, and
transfer the control signals to the self-propelled load bearing cart (200, 200', 200"), such that the self-propelled load bearing cart (200, 200', 200") can follow the mobile optical marker (110).

6. The virtual coupling according to any one of claims 4-5, further comprising a remote controlled or autonomous unit (100) comprising the mobile optical marker (110).

7. The virtual coupling according to claim 6, wherein the remote controlled or autonomous unit (100) comprises a projector (102) configured to project the mobile optical marker (110).

8. The virtual coupling according to claim 7, wherein the projector (102) is further configured to project an optical code (111) comprising identity information, to be read by the optical sensor (251).

9. The virtual coupling according to any one of claims 6-8, wherein the remote controlled or autonomous unit (100) comprises a wireless communication unit configured to at least one of transmit and receive wireless communication to or from the self-propelled load bearing cart (200, 200', 200").

10. The virtual coupling according to claim 9, wherein the wireless communication unit is configured to at least one of receive and transmit identity information to or from the self-propelled load bearing cart (200, 200', 200").

11. The virtual coupling according to any one of claims 5 - 10, wherein the mobile optical marker (110) comprises an optical code (111), and wherein:
the optical sensor (251) is configured to read the optical code (111), and
the computing unit (253) is configured to derive identity data from the read optical code (111).

12. The virtual coupling according to claim 11, wherein the remote controlled or autonomous unit (100) comprises means for flying (104).

13. A self-propelled load bearing cart (200, 200', 200") configured to follow a mobile optical marker (110), the self-propelled load bearing cart (200, 200', 200") comprising:
an optical sensor (251) configured to sense a vertical sensor area (SA) vertically overlapping the mobile optical marker (110), wherein the optical sensor (251) is configured to derive sensor signals based on sensing of the mobile optical marker (110),
a drive unit (223), and
a computing unit (253) configured to:
- receive the sensor signals,
- determine change in velocity and change in direction of the mobile optical marker (110),
- generate control signals on the basis of the determined change in velocity and change in direction, and
- transfer the control signals to the drive unit (223), such that the self-propelled load bearing cart (200, 200', 200") can follow the mobile optical marker (110).

14. The self-propelled load bearing cart according to claim 13, wherein the mobile optical marker (110) comprises an optical code, and wherein:
the optical sensor (251) is configured to read the optical code, and
the computing unit (253) is configured to derive identity data from the read optical code.

15. A method in a self-propelled load bearing cart (200, 200', 200"), the method comprising:
sensing a projected mobile optical marker (110), using an optical sensor (251),
deriving a control signal from the sensed mobile optical marker (251), using a computing unit (253), and
transferring the control signal to a drive unit (223), such that the self-propelled load bearing cart (200, 200', 200") follows the projected optical marker (110).
